# EUROPEAN PATENT SPECIFICATION

(11) **EP 3 868 765 B1**
(45) Date of publication and mention of the grant of the patent: **28.10.2026**
(21) Application number: 20397502.4
(22) Date of filing: 21.02.2020
(51) Int. Cl.: C07F 1/00, C10M 129/26, C10M 129/32, C10M 129/40, C10M 125/10, C10M 171/06

(54) **A METHOD FOR PREPARING AN ORGANOMETALLIC SALT COMPOSITION, AS WELL AS THE USE OF THE COMPOSITION IN A LUBRICANT ADDITIVE**
VERFAHREN ZUR HERSTELLUNG EINER ORGANOMETALLISCHEN SALZZUSAMMENSETZUNG SOWIE VERWENDUNG DER ZUSAMMENSETZUNG IN EINEM SCHMIERMITTELZUSATZ
PROCÉDÉ DE PRÉPARATION D'UNE COMPOSITION DE SEL ORGANOMÉTALLIQUE, AINSI QUE L'UTILISATION DE LA COMPOSITION DANS UN ADDITIF POUR LUBRIFIANT

(43) Date of publication of application: 25.08.2021
(73) Proprietor: Ab Nanol Technologies Oy, 21200 Raisio (FI)
(72) Inventor: AHO, Maiju, 20540 Turku (FI); LEMPIÄINEN, Samuli, 20100 Åbo (FI); BURROWS, Aubrey, Diss, Norfolk IP22 1AY (GB)
(74) Representative: Laine IP Oy

(56) References cited:
- EP-A1- 3 115 443
- TOSHITAKA ISHIZAKI ET AL: "A new one-pot method for the synthesis of Cu nanoparticles for low temperature bonding", JOURNAL OF MATERIALS CHEMISTRY, vol. 22, no. 48, 11 October 2012 (2012-10-11), GB, pages 25198 - 25206, XP055712387, ISSN: 0959-9428, DOI: 10.1039/c2jm34954j

## Description

### BACKGROUND OF THE INVENTION

### FIELD OF INVENTION

The present invention relates to an innovative method for producing a novel organometallic salt composition, and to the use of said method in producing a lubricant additive composition comprising the organometallic salt composition. The organometallic salt is stable, oil soluble, and with no tendency to agglomerate or form sediments. Moreover, the method of the invention is improved in that the rate of reaction is faster with higher conversion of the metal carbonate to the organometallic salt, and the filterability characteristics of the final product are superior. The obtained organometallic composition is useful as a component in lubricant additives that reduces friction and provides wear protection, and is also soluble in a wide variety of hydrocarbon oils.

### BACKGROUND OF THE INVENTION

The application of copper-based organometallic compounds has generated a great deal of interest in recent years, especially in the field of lubrication. The use of these copper-based compounds is, however, restricted by copper's inherent instability and also the poor oil solubility due to agglomeration and sedimentation.

The prior art shows that useful copper-based lubricant additive compositions are available, such as in WO 2015/172846 A1. It also demonstrates, however, that there are significant shortcomings in terms of limited oil solubility as well as agglomeration, and sedimentation. These limitations have driven a lot of research to find new solutions using different synthetic strategies. The efforts have focused on the development of improved and alternative process methods.

The prior art demonstrates that an in-situ hydrocarbon process involving copper-based organometallic compounds and other supporting materials provides an effective method to produce organometallic compounds and nanoparticles. Such a process has also been described in said publication WO 2015/172846 A1. The nanoparticles have complex structures and have been shown to be very beneficial in terms of reducing friction and wear in lubrication systems.

This prior art, however, still has significant shortcomings due to limited oil solubility as well as agglomeration and sedimentation problems.

There have also been challenges because the metal carbonate that is used to manufacture the organometallic compounds only reacts slowly with the used carboxylic acid. As a result, it has been difficult to ensure that the metal carbonate is completely converted to the organometallic compound, whereby these prior art methods leave a significant amount of unreacted and insoluble material in the final product mixture.

To solve this problem, there have been some attempts to increase the length of the reaction times, as shown in US2017158980. High reaction temperatures have also been used. This is undesirable because side-reactions can occur where unsaturated carboxylic acids polymerize and form insoluble by-products.

EP 3 115 443 A1 discloses a conventional method for preparing an organometallic salt composition by reacting copper carbonate with oleic acid.

The purpose of the present invention is to overcome these drawbacks, and particularly to provide a method to produce effective lubricant additive and lubricant systems in more efficient manner.

### SUMMARY OF THE INVENTION

It is an objective of the present invention to provide a method of preparing a composition that is suitable for use in protection of friction surfaces.

It is another object of the present invention to provide such a method that proceeds via fast and effective reactions.

It is a further object of the invention to produce a lubricant additive composition that is effective in reducing friction and wear of moving parts in lubricated machinery.

Thus, the present invention relates to a method to prepare an organometallic salt composition that is stable, truly oil soluble, and has no tendency to agglomerate, form sediments, or other insoluble dropout. In particular, the invention relates to an improved method where the rate of reaction is faster compared to prior art methods, the duration of the preparation is shorter, and the reaction temperature is lower.

Using this method, several advantages will be achieved, such as a more complete conversion of the metal carbonate to the organometallic salt, and superior filterability characteristics of the final product.

The standard process in the prior art for preparing such organometallic salts has been to react the metal carbonate having a particle size of about 50 µm with the carboxylic acid, and heating the mixture to about 150°C at sub-atmospheric pressure. The product obtained using this prior art process has, however, been discovered to still contain a significant amount of unreacted carbonate.

It has now been surprisingly found that the organometallic salt obtained by using the method of the present invention has significantly improved stability and oil solubility. This is due to the reduced amount of unreacted metal component in the final product, thus reducing the inherent instability and poor oil solubility that the unreacted metal component brings to the final salt composition.

The rate of reaction of the metal carbonate and the carboxylic acid is also considerably faster resulting in a much shorter duration. In addition, the amount of unreacted copper carbonate is substantially reduced. Furthermore, the temperature of the reaction can be reduced to mitigate against the risk of the polymerization side-reactions involving the carboxylic acid. This reduces the risk of insoluble material in the final product, which is a significant problem with unsaturated carboxylic acids.

### DRAWING OF THE INVENTION

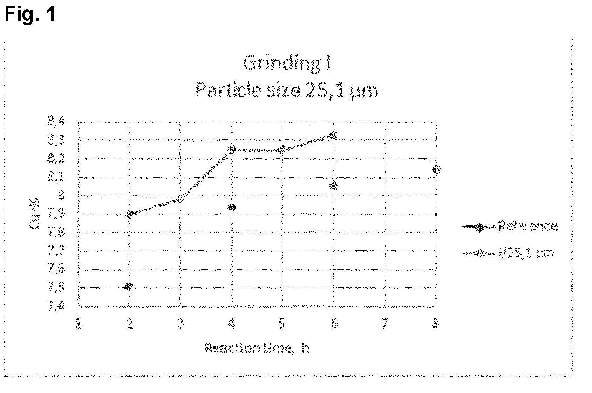

Figure 1 is a graph showing the rate of conversion of copper carbonate with oleic acid to copper oleate.

### EMBODIMENTS OF THE INVENTION

Definitions:
In the present context, the term "long chain carboxylic acid" is intended to encompass carboxylic acids having a carbon chain of the length C₁₃ to C₂₂. The chain can be linear or branched.

Similarly, a "short chain carboxylic acid" is intended to cover monocarboxylic acids having less than 6 carbon atoms. Thus, a branched short-chain monocarboxylic acid has 4 or 5 carbon atoms.

Thus, a "medium chain carboxylic acid", in the present context, has 6 to 12 carbon atoms.

The term "organometallic salt" or "organometallic salt composition" is, in turn, intended to encompass the reaction product obtained when reacting a metal salt, such as a metal carbonate, with such a carboxylic acid, preferably with a long-chain carboxylic acid.

The present invention may be characterized by way of an innovative synthesis method, where organometallic salts are prepared and then reacted further.

Thus, the invention relates to a method for preparing an organometallic salt composition comprising the steps of
- reacting at least one long chain monocarboxylic acid with a metal carbonate having a particle size of < 30 µm,
- heating the mixture of components to a temperature of 100 - 140°C, and mixing for at least 3 hours, and
- recovering the product.

The critical step in the preparation of the organometallic salt compositions in the present invention involves the reaction of a metal carbonate, for example copper carbonate, with at least one monocarboxylic acid, particularly being a long chain monocarboxylic acid, for example oleic acid. A wide range in the proportions of the carboxylic acid may be employed, preferably such that the molar ratio of the carboxylic acid to the metal of the carbonate reactant may range from 1:1 to 1:20. Examples of the acids include saturated monocarboxylic acids such as lauric, myristic, palmitic or stearic. Preferably unsaturated acids should be used such as linolenic, linoleic and oleic acids, oleic acid being particularly preferred. Saturated and unsaturated branched monocarboxylic acids can also be used, for example iso-stearic acid. Optionally naphthenic acids or synthetic carboxylic acids can also be used.

The metal carbonate may, in turn, comprise one of silver, gold, palladium, copper, cobalt, lead, tin, bismuth, molybdenum, titanium, tungsten and nickel as metal element. More preferably, the metal carbonate comprises copper or cobalt, and most preferably copper.

The standard process in the prior art, proceeding with larger particles of metal carbonate and using higher temperatures, has been discovered to result in a product that still contains a significant amount of unreacted metal carbonate.

The improved method of the present invention uses metal carbonate with reduced particle size, preferably a particle size of < 30 µm, most suitably about 25 µm. This reduced particle size can be achieved for example by pulverizing the particles using a mill, e.g. a laboratory ball mill. Such a laboratory ball mill consists of a hollow cylindrical shell rotating about its axis. The axis of the shell may be either horizontal or at a small angle to the horizontal. It is partially filled with balls. The grinding media are the balls, which may be made of steel, stainless steel, ceramic or rubber. The inner surface of the cylindrical shell is usually lined with an abrasion-resistant lining material. The ball mill is a type of grinder that works on the principle of impact and attrition. The particle size reduction is done by impact as the balls drop from near the top of the shell.

Thus, the reaction of the present method is preferably conducted by placing the selected monocarboxylic acid into a reaction vessel, and adding the metal carbonate having said reduced particle size with vigorous stirring.

The reaction begins already at ambient temperature when mixing the carboxylic acid and the metal carbonate. The reactants are still heated, but only to a temperature of 100 - 140°C, preferably about 130° C, while stirring.

The reaction is typically complete in about 4 hours, whereby the mixing and heating preferably are continued for 4 to 6 hours. With the larger particles of metal carbonate, it was common that the reaction would take about 16 hours to be sufficiently complete. The salt mixture is then typically filtered and allowed to cool.

A positive feature of the method of the invention is that the reaction already starts at ambient temperature, which is a significant improvement to the prior art methods in terms of reactivity. The reactants are still preferably heated, but only to a reduced temperature, compared to prior art methods, such as to a temperature of about 130° C, and the mixture is stirred.

Another positive feature of the present method is that the reaction is complete in only 4 hours, compared to 16 hours previously.

The obtained metal salt mixture can then be filtered, in order to remove impurities and possibly remaining traces of unreacted reactants, and can then be allowed to cool, e.g. to 60° C, to cause the salt to solidify. After the precipitation, the temperature can be lowered further. The thus obtained salt product contains only minor amounts of unreacted metal carbonate that is easily removed e.g. by said filtration. The rate of filtration is also faster, as compared to the prior methods. The inventors have also not observed any evidence of polymeric material clogging the filter.

The organometallic salt made by this method is clear and bright after the process is complete and is also clear and bright after long term storage at ambient temperature for one month.

The organometallic salt composition of the present invention can also be combined with further components to form a lubricant additive composition. These further components preferably include a first metal component and a second metal component.

Typically, these further components are combined into an activated complex by forming particles, preferably nanoparticles, including the first metal component in metallic form, and adding them into a complex together with a second metal component. The second metal component is able to reduce the metal element in the first metal component. The second metal component should be able to influence the redox potential of the metal element in the first metal component.

The activated complex preferably also contains a component that functions as a ligand. The ligand can be either a surfactant or a dispersant; examples are succinimide, poly-ethoxylated tallow amide and diethanol amine.

The activated complex should comprise particles including the first metal component and optionally the second metal component.

Preferably, the activated complex further contains at least one compound improving the solubility of an oxidized form of the metal element in the first metal component, e.g. epoxy resin of diethylene glycol or epoxidized dipropylene glycol.

In addition, it is preferred that the activated complex also comprises at least one reducing agent, e.g. diphenyl amine or hexadecyl amine.

Preferably, the difference of the standard electrode potentials of the metal element in the second metal component and the metal element in the first metal component is at least 0.2 V, based on the metallic form of each metal element and the first stable oxidation state.

Preferably, the first metal component of the activated complex comprises gold, silver, copper, palladium, tin, cobalt, zinc, bismuth, manganese and/or molybdenum , especially preferably copper and/or cobalt, more preferably copper.

Similarly, the second metal component of the activated complex preferably comprises tin, bismuth, zinc, and/or molybdenum, especially preferably, tin, bismuth and/or zinc, more preferably tin.

Likewise, it is preferred that the particles including a second metal component comprises the first metal component in metallic form.

The particles comprising the first and optionally the second metal component preferably exhibit a diameter in the range of 1 to 10 000 nm, more preferably in the range of 5 to 1 000 nm, especially preferably in the range of 10 to 500 nm, most suitably in the range of 15 to 400 nm.

Preferably, the lubricant additive composition described above comprises a soluble metal compound being derived from the first metal component. Preferably, this lubricant additive composition is able to form metal plating.

Preferably, the weight ratio of the organometallic salt composition to the activated complex is in the range of 10000:1 to 1:1.

The process for obtaining the activated complex referred to above is disclosed in more detail in the international patent application No. PCT/EP2015/060811 (WO 2015/172846 A1).

### EXAMPLES

### Example 1: Preparation of copper carbonate particles with size 25 µm

The grinding copper carbonate particles was carried out using a ball mill. It consists of a hollow cylindrical shell rotating about its axis. The axis of the shell may be either horizontal or at a small angle to the horizontal. It is partially filled with balls. The grinding media are the balls, which may be made of steel, stainless steel, ceramic or rubber. The inner surface of the cylindrical shell is usually lined with an abrasion-resistant lining material. The ball mill is a type of grinder that works on the principle of impact and attrition. The particle size reduction is done by impact as the balls drop from near the top of the shell. The original size of the commercially supplied copper carbonate was about 45 µm. After grinding the copper carbonate for two hours the particle size was about 25 µm.

### Example 2: Preparation of an organometallic salt according to the present invention

The organometallic salt of the present invention was prepared by placing oleic acid into a reaction vessel equipped with a thermometer, condenser, distilling trap, and stirrer. Copper carbonate with particle size 25 µm was slowly added to the reaction vessel with vigorous stirring, and the components were allowed to react in an oxygen-free environment for 4 h at 130 °C. The amounts of components were selected so that the copper oleate provides a copper concentration in the final salt in the range of 8-9 wt%. This procedure resulted in a copper-based organometallic salt composition that had good solubility in hydrocarbon oils. It also had good stability and no tendency to agglomerate or form sediments.

### Example 3: Preparation of the activated complex.

The first step is preparation of the copper (II) chloride solution. Diethylene glycol (about 3.5 kg) was placed in a glass-lined vessel fitted with a stirrer and heating capability. This was heated to about 40° C. and copper chloride (0.357 kg) was slowly added with stirring to ensure the material is totally dissolved. The C-5A succinimide (2.1 kg) was then slowly added with stirring but no heating. Diphenylamine (1.72 kg) was next added in small portions and the mixture was stirred to ensure it was homogenous. Finally, DEG-1 epoxy resin (1.86 kg) was added and thoroughly stirred.

The second step is preparation of the tin (IV) chloride solution. In a separate glass-lined vessel fitted with a stirrer and heating capability, Tin (IV) chloride pentahydrate (4.2 kg) was dissolved in octanol (about 9.8 kg) by stirring the mixture at about 40° C.

The third step is making of the activated complex. In a separate glass-lined vessel fitted with a stirrer and cooling capability, the tin (IV) chloride solution prepared above was added to the copper (II) chloride solution also prepared above under stirring. The tin (IV) chloride solution was be added in small portions and the temperature must be maintained below 50° C. After the addition was complete the mixture was stirred for a further period to ensure it was homogenous.

### Example 4: Preparation of the lubricant additive composition

The lubricant additive composition is prepared by slowly adding the activated complex (23.5 kg) from Example 2 to the copper oleate (about 970 kg) from Example 1 in a glass-lined vessel fitted with a stirrer and heating capability. The temperature of the mixture was maintained at about 60° C, and stirred for a further period to ensure it was homogenous.

### Example 5: Comparative example of the organometallic salt made according to the United States patent application US2017158980.

The organometallic salt according to the prior art was prepared by reacting copper carbonate with particle size 45 µm together with oleic acid, so that the copper oleate provides a copper concentration in the final salt in the range of 8-9 wt%. The method to prepare the copper oleate involved reacting copper carbonate and oleic acid in an oxygen-free environment for up to 16 h at 150 °C. The copper oleate made by this method was product clear and bright immediately after synthesis. It was, however, found to contain suspended copper carbonate, which separated, agglomerated, and formed sediment after short-term storage under ambient conditions. It was not possible to re-homogenize the sediment by vigorous shaking to produce a clear and bright product.

### Example 6: Comparison of the rate of reaction between copper oleate and oleic acid for copper carbonate with different particle sizes

Figure 1 shows the rate of conversion of copper carbonate with oleic acid to copper oleate. The reaction was carried with the relative amounts of copper carbonate and oleic acid as described above. It was done on a laboratory scale in a rotavapor under vacuum and at a temperature of 130°C.

Table 1 below shows the increase in concentration of copper over time as the reaction proceeds. This is a measure the rate of conversion of copper carbonate to copper oleate.

One of the curves of Fig. 1 is for the reference commercial copper carbonate (ungrinded, particle size about 45 µm). The other curve is for the grinded copper carbonate used in the present invention, particle size about 25 µm. If all the copper carbonate reacts with oleic acid the copper concentration should be about 8.5 wt%. The samples were filtered prior to analysis to remove any unreacted copper carbonate.

The below table shows that with the reference commercial copper carbonate (particle size about 45 µm), after 8h the copper concentration is only 8.1 wt%. This demonstrates that the conversion of copper carbonate to copper oleate is incomplete. In comparison, the grinded copper carbonate (particle size about 25 µm) conversion of copper carbonate to copper oleate is complete after 4h. This demonstrates that it is possible to cut the reaction time in half. It also shows that the reaction is very fast at the beginning with copper carbonate, particle size about 25 µm.

**Table 1. Copper concentrations in reference samples and samples of the invention**

| Time (h) | Reference, Cu-% | After grinding 2h, Cu-% |
|---|---|---|
| 2 | 7,51 | 7,9 |
| 3 | | 7,98 |
| 4 | 7,94 | 8,25 |
| 5 | | 8,25 |
| 6 | 8,05 | 8,33 |
| 7 | | |
| 8 | 8,14 | |

## Claims

1. A method for preparing an organometallic salt composition comprising the steps of
- reacting at least one C₁₃ to C₂₂ monocarboxylic acid with a metal carbonate having a particle size of < 30 µm, and
- heating the mixture of components to a temperature of 100 - 140°C, and mixing for at least 3 hours, and
- recovering the product.

2. The method according to claim 1, wherein the metal carbonate is selected from the group consisting of silver, gold, palladium, copper, cobalt, lead, tin, bismuth, molybdenum, titanium, tungsten and nickel carbonate.

3. The method according to claim 1 or 2, wherein the metal carbonate comprises copper or cobalt carbonate, preferably being copper carbonate.

4. The method according to any preceding claim, wherein the metal carbonate has been milled to provide a reduced particle size.

5. The method according to any preceding claim, wherein the metal carbonate particles have been selected from or milled into particles having a particle size of about 25 µm.

6. The method according to any preceding claim, wherein the C₁₃ to C₂₂ monocarboxylic acid is an unsaturated acid, preferably being linolenic, linoleic or oleic acid, preferably being oleic acid.

7. The method according to any preceding claim, wherein the molar ratio of the C₁₃ to C₂₂ carboxylic acid to the metal of the metal carbonate is in the range 1:1 to 20:1.

8. The method according to any preceding claim, wherein the mixture of components is heated to a temperature of about 130°C, and preferably mixed at said elevated temperature until the mixture is in liquid form.

9. The method according to any preceding claim, wherein the mixture of components is heated and mixed for 4 - 6 hours.

10. The method according to any preceding claim, which yields copper oleate as the organometallic salt.

11. Use of the method of any of claims 1 to 10 in preparing a lubricant additive composition comprising the organometallic salt composition as prepared in any of claims 1 to 10, mixed with an activated complex comprising a first metal component, a second metal component, and particles comprising a first metal component.

12. The use according to claim 11, wherein the first metal component of the activated complex comprises gold, silver, copper, palladium, tin, cobalt, zinc, bismuth, manganese and/or molybdenum, preferably copper and/or cobalt, more preferably copper.

13. The use according to claim 11 or 12, wherein the second metal component of the activated complex comprises tin, bismuth, zinc, and/or molybdenum, preferably tin, bismuth and/or zinc, more preferably tin.

14. Use of the method according to any of claims 1 to 10 for preparing a composition reducing friction and wear of lubricated surfaces.

## Patentansprüche

1. Verfahren zum Herstellen einer metallorganischen Salzzusammensetzung, umfassend die Schritte von
- Umsetzen mindestens einer C₁₃- bis C₂₂-Monocarbonsäure mit einem Metallcarbonat, das eine Partikelgröße von < 30 µm aufweist, und
- Erwärmen der Mischung von Komponenten auf eine Temperatur von 100 - 140 °C und Mischen für mindestens 3 Stunden und
- Rückgewinnen des Produkts.

2. Verfahren nach Anspruch 1, wobei das Metallcarbonat aus der Gruppe ausgewählt ist, bestehend aus Silber-, Gold-, Palladium-, Kupfer-, Kobalt-, Blei-, Zinn-, Bismut-, Molybdän-, Titan-, Wolfram- und Nickelcarbonat.

3. Verfahren nach Anspruch 1 oder 2, wobei das Metallcarbonat Kupfer- oder Kobaltcarbonat umfasst, bevorzugt Kupfercarbonat ist.

4. Verfahren nach einem vorstehenden Anspruch, wobei das Metallcarbonat gemahlen wurde, um eine verringerte Partikelgröße bereitzustellen.

5. Verfahren nach einem vorstehenden Anspruch, wobei die Metallcarbonatpartikel aus Partikeln, die eine Partikelgröße von etwa 25 µm aufweisen, ausgewählt oder dazu gemahlen wurden.

6. Verfahren nach einem vorstehenden Anspruch, wobei die C₁₃- bis C₂₂-Monocarbonsäure eine ungesättigte Säure ist, bevorzugt Linolen-, Linol- oder Ölsäure, bevorzugt Ölsäure ist.

7. Verfahren nach einem vorstehenden Anspruch, wobei das Molverhältnis der C₁₃- bis C₂₂-Carbonsäure zu dem Metall des Metallcarbonats im Bereich 1:1 bis 20:1 liegt.

8. Verfahren nach einem vorstehenden Anspruch, wobei die Mischung von Komponenten auf eine Temperatur von etwa 130 °C erwärmt und bevorzugt bei der erhöhten Temperatur gemischt wird, bis die Mischung in flüssiger Form vorliegt.

9. Verfahren nach einem vorstehenden Anspruch, wobei die Mischung von Komponenten für 4 - 6 Stunden erwärmt und gemischt wird.

10. Verfahren nach einem vorstehenden Anspruch, das Kupferoleat als das metallorganische Salz ergibt.

11. Verwendung des Verfahrens nach einem der Ansprüche 1 bis 10 beim Herstellen einer Schmierstoffadditivzusammensetzung, umfassend die metallorganische Salzzusammensetzung wie nach einem der Ansprüche 1 bis 10 hergestellt, gemischt mit einem aktivierten Komplex, umfassend eine erste Metallkomponente, eine zweite Metallkomponente und Partikel, die eine erste Metallkomponente umfassen.

12. Verwendung nach Anspruch 11, wobei die erste Metallkomponente des aktivierten Komplexes Gold, Silber, Kupfer, Palladium, Zinn, Kobalt, Zink, Bismut, Mangan und/oder Molybdän, bevorzugt Kupfer und/oder Kobalt, bevorzugter Kupfer umfasst.

13. Verwendung nach Anspruch 11 oder 12, wobei die zweite Metallkomponente des aktivierten Komplexes Zinn, Bismut, Zink und/oder Molybdän, bevorzugt Zinn, Bismut und/oder Zink, bevorzugter Zinn umfasst.

14. Verwendung des Verfahrens nach einem der Ansprüche 1 bis 10 zum Herstellen einer Zusammensetzung zum Verringern von Reibung und Verschleiß von geschmierten Oberflächen.

## Revendications

1. Procédé de préparation d'une composition de sel organométallique comprenant les étapes consistant à :
- faire réagir au moins un acide monocarboxylique en C₁₃ à C₂₂ avec un carbonate métallique présentant une taille de particules de < 30 µm, et
- chauffer le mélange de composants à une température comprise entre 100 et 140 °C et mélanger pendant au moins 3 heures, et
- récupérer le produit.

2. Procédé selon la revendication 1, dans lequel le carbonate métallique est choisi parmi le groupe constitué de carbonate d'argent, d'or, de palladium, de cuivre, de cobalt, de plomb, d'étain, de bismuth, de molybdène, de titane, de tungstène et de nickel.

3. Procédé selon la revendication 1 ou 2, dans lequel le carbonate métallique comprend du carbonate de cuivre ou de cobalt, de préférence du carbonate de cuivre.

4. Procédé selon une quelconque revendication précédente, dans lequel le carbonate métallique a été broyé pour obtenir une taille de particules réduite.

5. Procédé selon une quelconque revendication précédente, dans lequel les particules de carbonate métallique ont été sélectionnées à partir de particules présentant une taille de particules d'environ 25 µm ou broyées en celles-ci.

6. Procédé selon une quelconque revendication précédente, dans lequel l'acide monocarboxylique en C₁₃ à C₂₂ est un acide insaturé, de préférence l'acide linolénique, linoléique ou oléique, de préférence l'acide oléique.

7. Procédé selon une quelconque revendication précédente, dans lequel le rapport molaire de l'acide carboxylique en C₁₃ à C₂₂ au métal du carbonate métallique est compris dans la plage allant de 1:1 à 20:1.

8. Procédé selon une quelconque revendication précédente, dans lequel le mélange de composants est chauffé à une température d'environ 130 °C, et de préférence mélangé à ladite température élevée jusqu'à ce que le mélange soit sous forme liquide.

9. Procédé selon une quelconque revendication précédente, dans lequel le mélange de composants est chauffé et mélangé pendant 4 à 6 heures.

10. Procédé selon une quelconque revendication précédente, qui donne de l'oléate de cuivre comme sel organométallique.

11. Utilisation du procédé selon l'une quelconque des revendications 1 à 10 dans la préparation d'une composition d'additif lubrifiant comprenant la composition de sel organométallique préparée selon l'une quelconque des revendications 1 à 10, mélangée à un complexe activé comprenant un premier composant métallique, un deuxième composant métallique et des particules comprenant un premier composant métallique.

12. Utilisation selon la revendication 11, dans laquelle le premier composant métallique du complexe activé comprend de l'or, de l'argent, du cuivre, du palladium, de l'étain, du cobalt, du zinc, du bismuth, du manganèse et/ou du molybdène, de préférence du cuivre et/ou du cobalt, plus préférentiellement du cuivre.

13. Utilisation selon la revendication 11 ou 12, dans laquelle le deuxième composant métallique du complexe activé comprend de l'étain, du bismuth, du zinc, et/ou du molybdène, de préférence de l'étain, du bismuth et/ou du zinc, plus préférentiellement de l'étain.

14. Utilisation du procédé selon l'une quelconque des revendications 1 à 10 pour la préparation d'une composition réduisant le frottement et l'usure de surfaces lubrifiées.
